# FASCICULE DE BREVET EUROPEEN

(11) **EP 0 832 001 B1**
(45) Date de publication et mention de la délivrance du brevet: **18.10.2000**
(21) Numéro de dépôt: 97903428.7
(22) Date de dépôt: 07.02.1997
(51) Int. Cl.: B60H 1/32

(54) **SYSTEME DE COMMANDE D'AIR CONDITIONNE POUR VEHICULE AUTOMOBILE**
STEUERUNGSSYSTEM FÜR EINE FAHRZEUGKLIMAANLAGE
MOTOR VEHICLE AIR CONDITIONING CONTROL SYSTEM

(30) Priorité: 09.02.1996 FR 9601644
(43) Date de publication de la demande: 01.04.1998
(73) Titulaire: TOUCHTUNES MUSIC CORPORATION, Las Vegas, NV 89104 (US)
(72) Inventeur: NATHAN, Guy, F-91330 Yerres (FR)
(74) Mandataire: Debay, Yves
(86) Numéro de dépôt international: FR9700252
(87) Numéro de publication internationale: WO9728976

(56) Documents cités:
- DE-A- 3 822 465
- DE-A- 4 320 145
- GB-A- 2 217 876

## Description

La présente invention concerne un système de commande d'air conditionné pour véhicule automobile.

Il est connu un système de commande tout ou rien d'air conditionné qui comprend un compresseur semi hermétique associé à un embrayage électromagnétique couplés soit à l'arbre du moteur thermique ou du moteur de propulsion soit à la sortie de distribution. En général l'embrayage est entraîné par la même courroie que celle qui entraîne aussi l'alternateur. Le conditionnement d'air s'effectue lors du couplage de l'embrayage électromagnétique et le système fonctionne en tout ou rien. Lorsque l'on a besoin de produire du froid l'embrayage accouple le compresseur au moteur thermique ou au moteur de propulsion. Lorsque la température de consigne est atteinte l'embrayage découple le compresseur qui ne produit plus de froid tant que l'habitacle reste dans la plage de température de consigne.

Un tel système présente les nombreux inconvénients suivants :

Un compresseursemi hermétique a un coefficient de performance peu élevé pour différentes raisons.

D'une part l'étanchéité de l'arbre tournant est réalisée par une garniture qui entraîne des frottements et des usures qui engendrent des microfuites rendant le compresseur semi hermétique. Ces microfuites due à la sortie d'arbre sont compensées par la présence d'une réserve de gaz frigorifique nécessitant des recharges périodiques.

D'autre part le compresseur est par nécessité situé proche du moteur thermique ou du moteur de propulsion et par conséquent dans une ambiance thermique peu favorable à la production de froid. Ensuite le mauvais rendement ou le mauvais coefficient de performance résulte de la vitesse de rotation de ce compresseur directement liée à la vitesse de rotation du moteur thermique ou du moteur de propulsion qui varie entre la vitesse la plus faible 800 tr/mn et la plus élevée de l'ordre de à 6 à 6500 tr/mn.

Or un compresseur frigorifique a un rendement et une production de froid optimum pour une vitesse nominale bien définie. Cette vitesse nominale du compresseur est en général de l'ordre de 1500 ou 1800 tr/mn.

Le compresseur doit produire souvent le maximum de froid lorsque la vitesse du moteur thermique ou du moteur de propulsion est la plus faible, due, par exemple, au besoin d'air conditionné dans les embouteillages ou au ralenti. Il faut donc dimensionner le système pour produire le froid nécessaire ou la puissance frigorifique nécessaire pour la vitesse la plus faible. Au-dessus de cette vitesse nominale un système de clapet de sécurité se déclenche pour créer une chute interne de pression.

En outre l'embrayage électromagnétique, qui assure la mise en service du compresseur, consomme beaucoup d'énergie électrique. Ceci pose un problème de bilan électrique au constructeur automobile. La sollicitation de la batterie par le système d'air conditionné devient trop importante et entraîne un redimensionnement de la capacité de la batterie et parfois même de l'alternateur.

Cet embrayage électromagnétique qui va fonctionner en tout ou rien va aussi contribuer au mauvais rendement du système par le fait que lorsque l'on arrête un compresseur, il est obligatoire de redémarrer complètement le cycle thermo dynamique. A chaque remise en service, les irréversibilités thermodynamiques sont perdues et il faut recompresser le gaz qui va par évaporation produire le froid

Ce fonctionnement en tout ou rien est un inconvénient majeur principalement pour les véhicules de petite cylindrée ou de faible puissance. Le couple demandé en début de cycle par le compresseur est maximum. Lorsque le véhicule se trouve au ralenti, la puissance demandée qui est le produit du couple par la vitesse (puissance demandée par le compresseur), risque de faire caler le moteur. Pour pallier cet inconvénient les constructeurs prévoient lors de la mise en service de l'air conditionné un accroissement de la vitesse de ralenti jusqu'à une valeur en général de l'ordre de 1100 tr/mn. Ceci va contribuer à l'augmentation de pollution et accroître la consommation d'essence.

Le but de l'invention est de pallier un ou plusieurs des inconvénients de l'art antérieur.

Ce but est atteint par le fait que le système de commande d'air conditionné à compresseur hermétique pour véhicule automobile comporte un système de régulation de la vitesse de rotation du compresseur hermétique tel que, quelle que soit la vitesse de rotation du moteur thermique ou du moteur de propulsion, le compresseur entraîné par un ensemble pompe à cylindrée variable accouplée à un moteur hydraulique de cylindrée constante tourne à une vitesse aussi proche que possible de la vitesse nominale du compresseur et un dispositif capteur permet de mesurer la vitesse de rotation de l'arbre du moteur hydraulique relié au compresseur de façon à faire varier par le comparateur le sens de déplacement du plateau de la pompe de cylindrée variable en fonction des variations de vitesse du moteur hydraulique par rapport à une vitesse de consigne.

Selon une autre particularité la variation de cylindrée de la pompe s'effectue en modifiant l'inclinaison d'une pompe à plateau par un ensemble servo moteur commandé par une logique électronique.

Selon une autre particularité un interrupteur de fin de course du plateau signalant la position neutre du plateau détermine l'arrêt du servo moteur.

Selon une autre particularité un système de régulation faisant varier la cylindrée de la pompe en fonction d'une température de consigne et de la température mesurée dans l'habitacle par un capteur.

Selon une autre particularité un autre comparateur permet de déterminer deux vitesses de consignes différentes une première (Z2) proche de la vitesse nominale du compresseur et inférieure à celle-ci lorsque la température de consigne a été atteinte, le servomoteur faisant varier la cylindrée de la pompe en sens inverse du sens de variation de la vitesse de la pompe et une deuxième (Z1) correspondant à une vitesse nominale.

Selon une autre particularité un troisième comparateur permet pour chaque vitesse de consigne (Z1 ou Z2) de déterminer une plage (ε) dans laquelle le servo est arrêté, la cylindrée de la pompe ne variant plus.

D'autres particularités et avantages de l'invention seront décrits ci-après en liaison avec un mode de réalisation non limitatif de l'invention représenté dans les figures ci-jointes dans lesquelles :

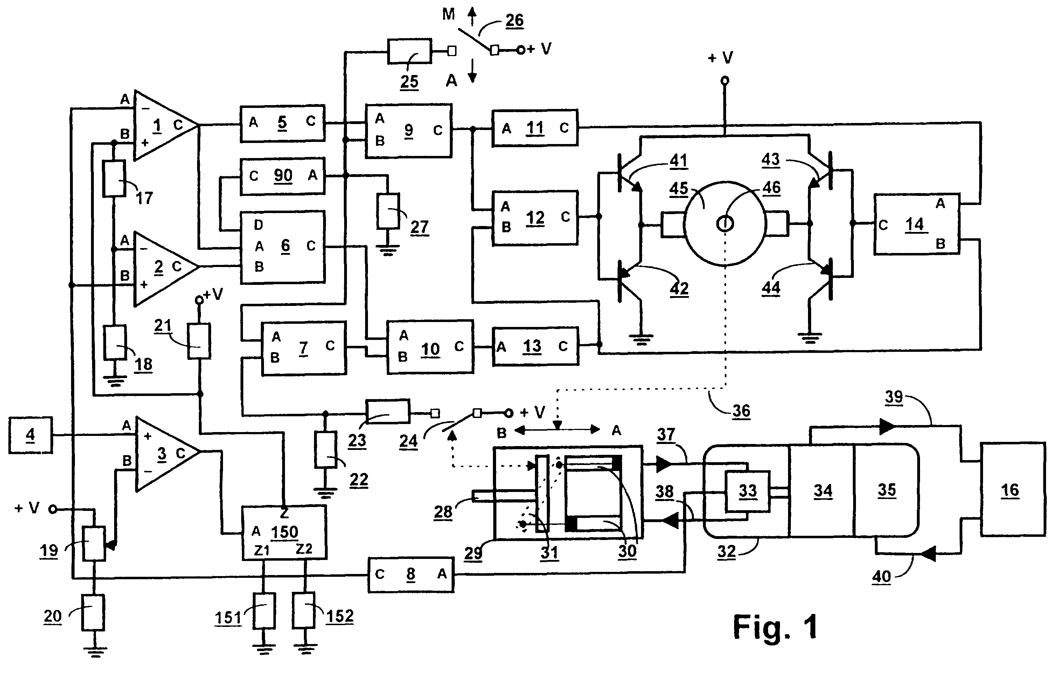

la figure 1 représente un schéma général du système de conditionnement d'air pour véhicule ;
les figures 2A à 2F représentent les différentes tables d'états représentant les principales conditions de fonctionnement du système de climatisation.

L'invention comporte un groupe hermétique (32) dans lequel est disposé, à l'intérieur de la cloche, un moteur hydraulique (33) à cylindrée fixe qui est alimenté en huile par les conduits (37, 38). Dans ce schéma le troisième conduit qui sert à récupérer les fuites internes de l'huile n'est pas représenté. Ce moteur hydraulique (33) est couplé à un compresseur (34) qui peut être du type à pistons ou de type rotatif. Ce compresseur (34) est actionné par le moteur hydraulique (33) auquel sont reliées les tuyauteries hydrauliques (37, 38). Une réserve (35) de gaz est reliée à un conduit de sortie (40) de gaz décompressé provenant du système de refroidissement (16) composé de façon connue d'un évaporateur, d'un condenseur et d'un système de convection forcée par ventilation. Le compresseur alimenté par la réserve (35), alimente par le conduit de gaz compressé (39) le système de refroidissement. Une pompe hydraulique (29) à cylindrée variable, de type à plateau tournant est entraînée soit par une courroie reliée au moteur thermique ou au moteur de propulsion soit directement en sortie d'arbre de distribution. Un système de démultiplication permet d'adapter les vitesses de rotation de cette pompe hydraulique (29). Cette démultiplication dépend du type de cylindrée choisie, du type de moteur et de la puissance absorbée. En général la puissance nécessaire pour entraîner ce groupe de compresseur hermétique va être comprise entre 400 et 2500 watts dépendant de la puissance frigorifique nécessaire qui est elle-même fonction du volume de l'habitacle, de l'isolation du véhicule, du nombre de surface vitrée. De plus le système de démultiplication permet d'obtenir un fonctionnement aussi proche que possible de la vitesse nominale du compresseur (34), même lorsque le moteur thermique ou le moteur de propulsion tourne au ralenti. Cette pompe hydraulique (29) à cylindrée variable comporte un plateau (31) à inclinaison variable et une série de pistons (30) dont deux seulement sont représentés. La flèche en pointillée (241) représente la liaison du plateau (31) à un interrupteur (24) de fin de course qui est actionné lorsque le plateau (31) est dans la position neutre représenté en trait plein c'est-à-dire lorsque les pistons (30) ne se déplacent plus, donc ne compressent plus l'huile pour obtenir un débit nul. Dans ce là, le moteur thermique ou le moteur de propulsion peut continuer à tourner en entraînant l'arbre (28) de la pompe (29) sans produire d'air conditionné. Ceci permet de faire un embrayage "progressif' (sans à coup) très intéressant au démarrage. Pour arrêter la production de froid il suffit d'amener le plateau (31) au neutre. L'inclinaison de ce plateau (31) va être contrôlée par un moteur, par exemple, électrique. Mais cela peu aussi bien être un système à électroaimant qui va actionner le déplacement de l'angle du plateau. Pour mieux expliciter l'invention nous donnons dans le mode de réalisation choisi comme exemple un servo moteur de type courant continu mais ce peut être également un moteur pas à pas. Le moteur (45) à courant continu, par la démultiplication éventuelle (36) va agir sur l'angle du plateau (31) dans un seul sens entre le neutre et un angle positif par exemple. L'angle négatif ne peut être obtenu, une butée mécanique limitant la course du plateau pour que le moteur hydraulique (33) ait le même sens de rotation que l'arbre (28) qui suit le sens de rotation du moteur thermique ou du moteur de propulsion. Par contre le servo moteur (45) va pouvoir tourner dans le sens contraire des aiguilles d'une montre (sens anti-horaire) ou dans le sens des aiguilles d'une montre (sens horaire). Les flèches A et B (36) montrent le sens de déplacement du plateau et correspondent respectivement au sens de rotation du servo moteur. Le servo moteur (45) est connecté à une alimentation en H commandée par un ensemble de circuits logiques, pour permettre de commander trois fonctions : un premier sens de rotation correspondant au sens des aiguilles d'une montre, un deuxième sens de rotation contraire au sens des aiguilles d'une montre et l'arrêt. Cet ensemble de circuits logiques va permettre d'une part par les deux portes NONET (12, 14) et une fonction OU constituée par la porte (9) de déterminer le sens de rotation et d'autre part par l'inverseur 13 de déterminer la mise en marche du servo moteur ou son arrêt.

L'ensemble de circuits logiques va permettre la commande et la régulation de l'air conditionné de la façon que nous explicitons ci-après. Cet ensemble de circuits logiques est constitué d'un convertisseur tension fréquence (8) relié à un capteur, par exemple de type tachymétrique, monté sur l'arbre du moteur hydraulique (33) de façon à convertir la vitesse de rotation de l'arbre du moteur hydraulique (33) en une fréquence. La sortie du circuit convertisseur (8) est reliée à une entrée négative (1A) d'un circuit comparateur (1) déterminant le sens de rotation du servo moteur dont la sortie (1C) est reliée, d'une part à l'entrée (5A) d'un circuit inverseur (5) et, d'autre part à l'entrée (6A) d'une porte ET (6) à trois entrées (6A, 6B, 6D). L'entrée (6D) de la porte ET (6) est reliée à la sortie (90C) d'un inverseur (90) dont l'entrée (90A) est reliée au point commun à deux résistances (25, 27) montées en série entre la masse et une borne d'un interrupteur marche-arrêt (26) dont l'autre borne est reliée à la tension positive d'alimentation. L'interrupteur (26) est ouvert en position marche et fermé en position arrêt.

La sortie (6C) de la porte (6) est reliée à l'entrée (10A) d'une porte (10) de type OU à deux entrées, dont la sortie (10C) est reliée à l'entrée (13A) d'une porte inverseuse (13). La sortie (13C) de cette porte inverseuse est reliée aux deux entrées B de chacune des deux portes NONET (12, 14) dont les sorties (12C, 14C) commandent le point milieu du montage en H formé par les transistors NPN (41, 43) et PNP (42, 44) dont le point commun aux émetteurs est relié aux bornes d'alimentation du servo moteur (45). Le point commun des collecteurs des deux transistors NPN (41, 43) est relié à la tension positive d'alimentation. Les collecteurs des deux transistors PNP (42, 44) sont reliés à la masse. La première entrée (12A) de la porte NONET (12) reçoit la sortie (9C) de la porte (9) de type OU, et la première entrée (14A) de la porte (14) reçoit la sortie (9C) de cette porte (9) après être passée à travers un inverseur (11). Une première entrée (9A) de la porte OU (9) reçoit la sortie (5C) de la porte (5) tandis que la deuxième entrée (9B) de cette porte (9) est reliée au point commun aux deux résistances (25, 27).

La deuxième entrée (10B) de la porte OU (10) reçoit à la sortie (7C) de la porte (7) de type "ET" a deux entrées. Une première entrée (7A) de cette porte est reliée au point commun aux deux résistances (25, 27) et, la deuxième entrée (7B) est reliée au point commun à deux autres résistances (23, 22) qui sont montées en série entre la masse et un deuxième interrupteur (24) alimenté par la tension positive d'alimentation. Cet interrupteur (24) est commandé à la fermeture par le plateau (31) lorsque celui-ci arrive à la position dite neutre.

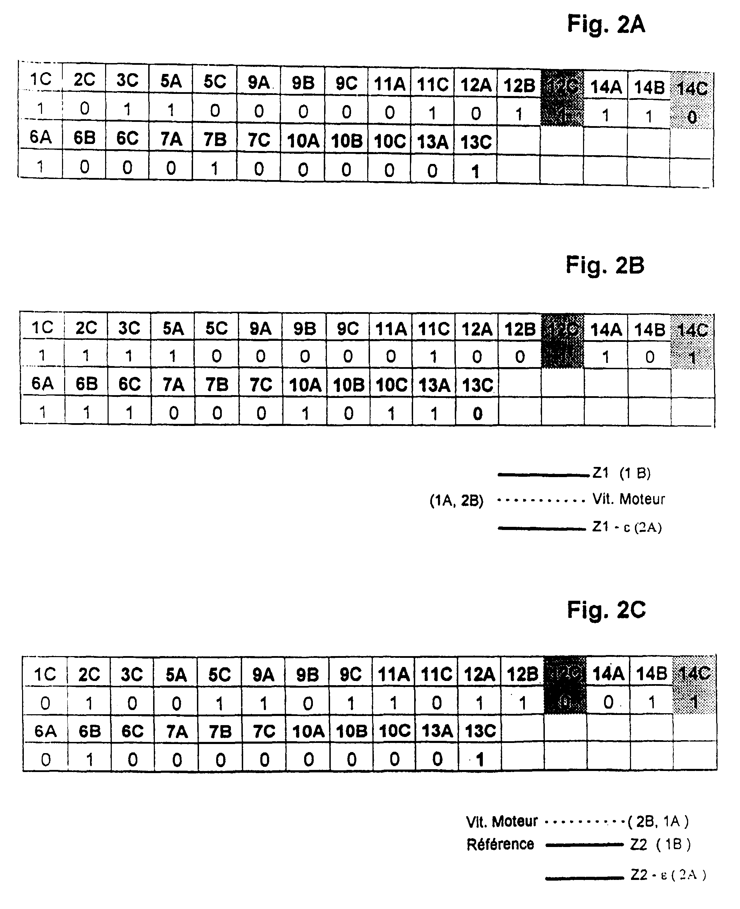

Une sonde (4) de température avec amplificateur, permet de mesurer la température de l'habitacle et de fournir un signal correspondant à celle-ci sur l'entrée positive (3A) d'un circuit comparateur (3) dont l'entrée négative (3B) est reliée à un potentiomètre (19) qui permet de fixer la température de consigne souhaitée pour l'habitacle. Le potentiomètre (19) est monté en série avec une résistance talon (20) du potentiomètre entre la masse et la tension positive d'alimentation. La sortie (3C) du circuit comparateur (3) est envoyée sur l'entrée A d'un inverseur analogique (150) commandé par cette sortie du comparateur. Cet inverseur analogique mettant à la disposition sur la sortie Z l'une des deux entrées Z1 et Z2 selon le niveau logique disponible sur l'entrée A. La première entrée Z1 est constituée d'une diode zener (151) reliée à la masse et la deuxième entrée Z2 est constituée d'une diode zener (152) reliée à la masse. Lorsque le niveau logique (1) est présent sur l'entrée A la sortie Z est reliée à la diode Z1 et lorsque le niveau logique est au niveau zéro la sortie Z est reliée à la diode Z2. Cette sortie Z est reliée d'une part à une résistance (21) dont l'autre extrémité est branchée au potentiel positif et d'autre part à l'entrée B positive du premier comparateur (1). Cette entrée B est également reliée par une résistance (17) à l'entrée A négative d'un deuxième comparateur (2). L'entrée A de ce deuxième comparateur est également reliée par une résistance (18) à la masse. Les résistances (17, 18) sont choisies de façon à ce que le signal sur l'entrée (2A) soit légèrement inférieur au signal sur l'entrée (1B) du comparateur (1) soit Z-ε (c'est-à-dire Z1-ε ou Z2-ε). Une deuxième entrée B positive du deuxième comparateur (2) est reliée à la sortie C du circuit convertisseur fréquence tension (8). Le fonctionnement du circuit de l'ensemble logique de commande va maintenant être décrit en liaison avec la table des états et figures 2A à 2F.

Le fonctionnement du dispositif va être explicité ci-après. Le but du système est d'avoir une vitesse de rotation constante du compresseur (34) tant que l'on n'a pas atteint la température de consigne et ce quelle que soit la vitesse de rotation du moteur. La pompe hydraulique et le circuit de commande vont faire en sorte qu'on obtienne au niveau du compresseur cette vitesse constante qui est par exemple de 1500 tr/mn. Suite aux inerties thermiques à l'intérieur de l'habitacle, le temps d'établissement de la température est toujours plus long que le temps de réaction du système servo moteur. Pour tenir compte de cela le système fonctionne avec deux références de vitesse, l'une (Z1) correspondant à la vitesse nominale du compresseur et l'autre (Z2) à une vitesse légèrement inférieure, définie respectivement par deux diodes zener (151, 152). Cette vitesse légèrement inférieure ayant pour but de réduire la production de froid lorsque la température de consigne est atteinte sans arrêter le compresseur en modifiant par le servo moteur la position du plateau tournant (31) de la pompe. Les positions du plateau tournant de la pompe peuvent également être modifiées par les signaux des comparateurs (1, 2) déterminant le sens de rotation ou l'arrêt du servomoteur, en fonction de la variation de vitesse du moteur thermique ou du moteur de propulsion. L'interrupteur (26) sert à la mise en service et hors service de l'air conditionné. L'interrupteur (24) indique au système de commande, lorsqu'il est fermé, que la cylindrée de la pompe est nulle c'est-à-dire que le plateau est dans la position neutre. Le fonctionnement dépendra essentiellement de six situations différentes représentées par les différentes tables d'état des figures 2A à 2F.

A la mise en service l'interrupteur (26) est ouvert et la vitesse du compresseur au départ est nulle. Le convertisseur (8) ne délivre pas d'information, le plateau du moteur hydraulique (31) est en position neutre, la température de l'habitacle est supérieure à la température de consigne. Dans ces conditions le signal délivré sur l'entrée (1A) du comparateur (1) est inférieur au signal délivré sur l'entrée (1B) du même comparateur puisque la vitesse est nulle. Ensuite le signal délivré sur l'entrée (2A) du comparateur (2) est supérieur au signal délivré sur l'entrée (2B). Par ailleurs la température de l'habitacle étant supérieure à la température de consigne, le signal sur l'entrée (3A) sera supérieur au signal sur l'entrée (3B).

Suite à ces conditions il est nécessaire que la cylindrée de la pompe augmente de façon à augmenter la vitesse de rotation du compresseur puisque celui-ci était arrêté. Pour ce faire le plateau (31) doit se déplacer dans le sens de la flèche A et le moteur (45) doit tourner dans le sens antihoraire. Compte tenu des conditions aux entrées des comparateurs (1, 2, 3) la table d'état de la figure (2A) nous donne les signaux logiques en sortie des différentes portes logiques et, on constate que la porte (12C) est à la valeur 1, la porte (14C) à la valeur 0, ce qui provoque le sens de rotation du moteur (45) dans le sens anti horaire. Lorsque la vitesse de rotation du compresseur (34) augmente la tension fournie par le convertisseur (8) augmente jusqu'à atteindre la valeur Z1-ε proche de la valeur correspondant à la vitesse de référence définie par la diode zener Z1. Le signal sur l'entrée (2B) est alors supérieur au signal sur l'entrée (2A) du comparateur (2) et la sortie (2C) est au niveau logique 1. Les signaux sur les entrées du comparateur (1) sont identiques au cas précédent ainsi que ceux sur le comparateur (3) puisque la température de consigne n'est pas encore atteinte. Cette situation aux entrées des comparateurs engendre les signaux logiques représentés par la table d'état de la figure (2B) dans laquelle on peut voir que la sortie (12C) et la sortie (14C) sont toutes deux au niveau 1. Ceci a pour conséquence d'arrêter la rotation du servo moteur (45) et le plateau (31) de la pompe reste dans la position où il était. On constate que dans cette table d'état la sortie de la porte (13C) est passé de l'état logique 1 à l'état logique 0 ce qui provoque l'arrêt du servo moteur par le passage des sorties (12C) et (14C) à 1.

Lorsque la température de consigne est atteinte, pour une vitesse constante de moteur thermique ou de moteur de propulsion, il faut provoquer une diminution de la cylindrée de la pompe de façon à réduire la vitesse de rotation du compresseur à une valeur de référence définie par la diode zener Z2 et fournir moins de froid. Dans ce cas là le signal sur l'entrée (3A) devient inférieur au signal sur l'entrée (3B) entraînant la commutation de l'inverseur (150) et la liaison de la sortie Z avec la diode Z2. Le signal sur l'entrée (1A) devient supérieur au signal sur l'entrée (1B), le signal (2A) restant inférieur au signal (2B). Cet état des signaux provoque le changement des états logiques des différents circuits selon la table de la figure 2C. Ceci a pour résultat de faire passer la sortie (12C) à zéro et la sortie (14C) reste à 1 provoquant ainsi la rotation du servo moteur (45) dans le sens horaire de façon à déplacer le plateau (31) dans le sens de la flèche B pour provoquer une diminution de la cylindrée jusqu'à ce que la vitesse de rotation pour le compresseur ait atteint la valeur Z2 souhaitée. Lorsque la valeur Z2 de consigne est atteinte le servo moteur s'arrête comme dans le cas de la figure 2B. Dès que la température de l'habitacle deviendra supérieure à nouveau à la température de consigne, on commutera à nouveau sur la vitesse de consigne définie par la diode zener Z1 pour augmenter la vitesse du compresseur jusqu'au moment où l'on retombe dans le cas de la figure 2C. Quelle que soit la variation de la vitesse de rotation du moteur thermique ou du moteur de propulsion, le système oscillerait entre les deux valeurs Z1, Z2 tant que l'air conditionné est en fonctionnement.

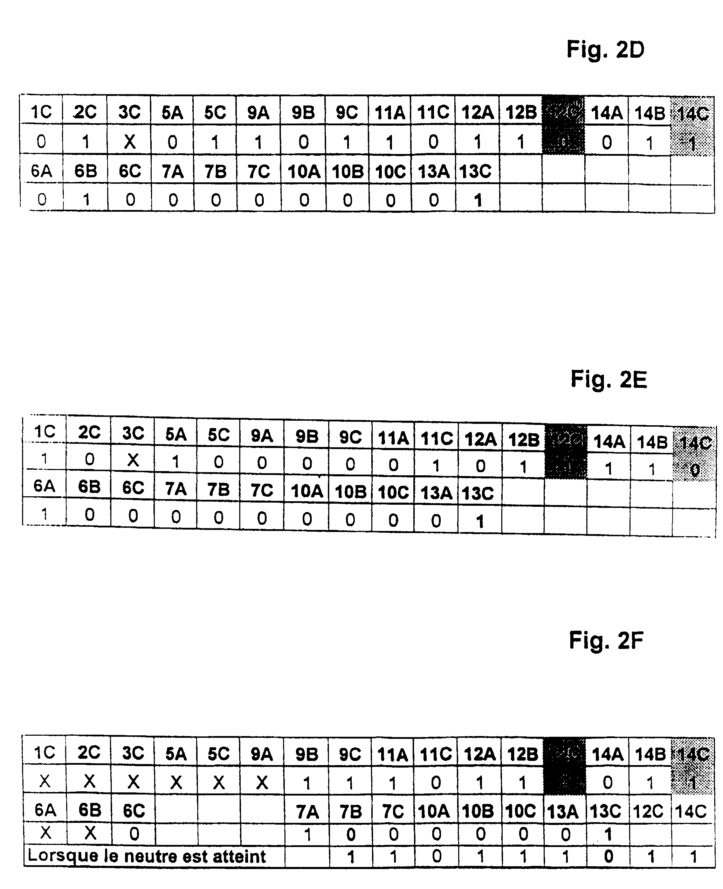

Dans le cas où il y a des variations de vitesse de rotation du moteur thermique ou du moteur de propulsion, on se retrouve dans les cas de figure correspondant aux figures 2D et 2E selon que la vitesse augmente ou diminue. Si la vitesse du moteur thermique ou du moteur de propulsion augmente elle entraîne, pour une cylindrée donnée, une augmentation de vitesse du moteur hydraulique. Le signal en entrée (1A) du comparateur (1) devient supérieur au signal (1B), le signal sur l'entrée (2A) sera inférieur au signal sur l'entrée (2B) et les valeurs sur les entrées (3A, 3B) ne sont pas déterminantes. Cette situation provoque l'apparition sur la sortie des portes logiques du circuit les états représentés à la figure 2D. Ceci a pour résultat de placer la sortie (12C) au niveau logique 0 et (14C) au niveau logique 1. La conséquence de ces valeurs est de provoquer une rotation du servo moteur (45) dans le sens (B) entraînant une diminution de l'angle du plateau et donc une diminution de cylindrée pour la pompe.

Dans le cas d'une diminution de la vitesse du moteur thermique ou du moteur de propulsion les conditions aux entrées des comparateurs (1, 2) sont inverses de celles du cas précédent et pour le comparateur (3) les conditions sont non déterminantes comme précédemment. De cet état de fait, il résulte que la sortie de la porte (12C) est au niveau logique 1 et la sortie de la porte (14C) est au niveau logique 0. Ceci entraîne une rotation du servo moteur (45) dans le sens (A) provoquant une augmentation de l'angle du plateau, ce sens correspondant à une augmentation de la cylindrée de la pompe. Ce cas est représenté par la table d'état de la figure 2E.

Enfin la dernière situation qui peut se produire correspond à la mise hors service de l'air conditionné par fermeture de l'interrupteur (26). Cette mise hors service alimente la résistance (25) et impose sur l'entrée (7A) de la porte (7) sur l'entrée (9B) de la porte (9) et sur l'entrée (90A) de la porte (90) un niveau logique 1.

Au moment de l'actionnement de l'interrupteur (26) on se trouvait au niveau des sorties des comparateurs (1, 2, 3) avec les conditions correspondant à l'une des cinq situations possibles vues précédemment.

Quelle que soient les valeurs en sortie des comparateurs (1, 2, 3) les valeurs déterminantes seront celles fixées à l'entrée (90A) de l'inverseur (90) qui fixe la sortie (90C) à la valeur 0 et la sortie (6C) à 0 et à l'entrée (9B) de la porte (9) qui fixera la sortie (9C) à la valeur 1 imposant un sens de rotation au servomoteur correspondant à une diminution de cylindrée de la pompe. La porte (7) aura une entrée (7A) au niveau logique 1 et sa sortie ne passera à 1 que lorsque l'entrée (7B) aura rejoint le niveau 1. Ceci se produira lorsque l'interrupteur (24) sera fermé c'est-à-dire lorsque le plateau atteindra la position neutre. Pendant tout le reste du temps la sortie (7C) et l'entrée (10A) étant à zéro, la sortie (10C) restera à zéro. Le plateau va donc être amené à la position neutre avant l'arrêt du système ce qui place le système dans les bonnes conditions pour le redémarrage d'un cycle de refroidissement.

On comprend que l'on a ainsi conçu un système qui permet de pallier un ou plusieurs inconvénients de l'art antérieur. Ainsi le groupe frigorifique de type hermétique entraîné par un moteur hydraulique à cylindrée déterminée qui est lui même actionné par une pompe hydraulique à cylindrée variable permet d'obtenir un meilleur coefficient de performance car un compresseur hermétique supprime les conditions d'étanchéité de garniture. De plus, par sa conception, un groupe hermétique a une durée de vie supérieure à la durée du véhicule et ne nécessite pas de recharge en gaz frigorifique. La vitesse de rotation constante du compresseur permet d'obtenir un meilleur rendement qui devient indépendant de la vitesse de rotation du moteur thermique ou du moteur de propulsion. La pompe hydraulique à cylindrée variable fait le nécessaire pour adapter la vitesse de rotation constante du compresseur. Le dispositif évite tout changement brutal de couple car lorsque la température de consigne est atteinte le compresseur va voir sa vitesse de rotation se réduire. Donc il n'y aura plus besoin de recommencer le cycle thermodynamique complet en évitant de perdre cette irréversibilité thermodynamique, pas de consommation électrique supplémentaire car plus d'embrayage électromagnétique. Le choix de l'endroit où est installé le compresseur n'est pas limité car des canalisations entre le moteur hydraulique et la pompe permettent d'éloigner le compresseur des sources de forte chaleur.

### ANNEXE

### ANNEXE A LA FIGURE 2A

### CONDITIONS :

- Mise en service de l'air conditionné (9B = 0 ; 6D = 1)
- Vitesse compresseur nulle
- Plateau du moteur hydraulique en position neutre
- Température habitacle > Température de consigne
- 1A < 1B ; 2A > 2B ; 3A > 3B

### CONSEQUENCES :

- Augmentation de cylindrée (36 A)
- Augmentation de la vitesse du compresseur

### ANNEXE A LA FIGUR 2B

### CONDITIONS :

- Vitesse du moteur thermique constante
- Vitesse compresseur atteint la vitesse de référence définie par Z1
- Température de consigne non atteinte
- 1A < 1B ; 2A < 2B ; 3A > 3B

### CONSEQUENCES:

- Arrêt du servomoteur

### ANNEXE A LA FIGURE 2C

### CONDITIONS :

- Température de consigne atteinte
- Vitesse du moteur thermique constante
- 1A > 1B ; 2A < 2B ; 3A < 3B

### CONSEQUENCES :

- Diminution de la cylindrée (36 B)
- Vitesse compresseur définie par la référence donnée par Z2 (Z2 < Z1)

### ANNEXE A LA FIGURE 2D

### CONDITIONS :

- Vitesse du moteur thermique augmente entraînant l'augmentation de vitesse du moteur hydraulique du compresseur
- 1A > 1B ; 2A < 2B ; 3A > 3B ou 3A < 3B (3C n'étant pas déterminant)

### CONSEQUENCES:

- Diminution de la cylindrée (36B) si vitesse moteur > Tension de référence (Z1 ou Z2)

### ANNEXE A LA FIGURE 2E

### CONDITIONS :

- Vitesse du moteur thermique diminue
- 1A < 1B ; 2A > 2B ; 3A < 3B ou 3A > 3B

### CONSEQUENCES :

- Augmentation de la cylindrée (36A)

### ANNEXE A LA FIGURE 2F

### CONDITIONS :

- Mise hors service de l'air conditionné (9B = 1 ; 6D = 0) 1A, 1B ; 2A, 2B ; 3A, 3B, non déterminants

### CONSEQUENCES:

- Diminution de la cylindrée (36 B) forcée par 9B (sens de rotation imposé) entraînant diminution de vitesse du moteur compresseur
- Arrêt du servomoteur lorsque le plateau est au neutre (7B = 1 )

## Revendications

1. Système de commande d'air conditionné à compresseur hermétique pour véhicule automobile caractérisé en ce que le système de commande comporte un système de régulation de la vitesse de rotation du compresseur hermétique (34), tel que le compresseur entraîné par un ensemble pompe (30) à cylindrée variable accouplée à un moteur hydraulique (33) de cylindrée constante tourne à une vitesse aussi proche que possible de la vitesse nominale du compresseur ce quelle que soit la vitesse de rotation du moteur thermique ou du moteur de propulsion et un dispositif capteur (8) permet de mesurer la vitesse de rotation de l'arbre du moteur hydraulique (33) relié au compresseur (34) de façon à faire varier par le comparateur (1) le sens de déplacement du plateau (31) de la pompe (30) de cylindrée variable en fonction des variations de vitesse du moteur hydraulique par rapport à une vitesse de consigne.

2. Système d'air conditionné selon la revendication 1, caractérisé en ce que la variation de cylindrée de la pompe (30) s'effectue en modifiant l'inclinaison d'une pompe à plateau (31) par un ensemble servo moteur (45) commandé par une logique électronique.

3. Système d'air conditionné selon la revendication 1 ou 2, caractérisé en ce qu'un interrupteur (24) de fin de course du plateau signalant la position neutre du plateau détermine l'arrêt du servo moteur (45).

4. Système d'air conditionné selon une des revendications précédentes, caractérisé en ce qu'un système de régulation faisant varier la cylindrée de la pompe en fonction d'une température de consigne (19) et de la température mesurée dans l'habitacle par un capteur (4).

5. Système d'air conditionné selon une des revendications précédentes, caractérisé en ce qu'un autre comparateur (32) permet de déterminer deux vitesses de consignes différentes une première (Z2) proche de la vitesse nominale du compresseur et inférieure à celle-ci lorsque la température de consigne a été atteinte, le servomoteur faisait varier la cylindrée de la pompe en sens inverse du sens de variation de la vitesse de la pompe et une deuxième (Z1) correspondant à la vitesse nominale.

6. Système d'air conditionné selon la revendication 5, caractérisé en ce qu'un troisième comparateur (2) permet pour chaque vitesse de consigne (Z1 ou Z2) de déterminer une plage (ε) dans laquelle le servo est arrêté, la cylindrée de la pompe ne variant plus.

## Patentansprüche

1. System zur Steuerung einer Fahrzeugklimaanlage mit hermetischem Kompressor,
dadurch gekennzeichnet, dass das Steuersystem ein System zur Regulierung der Drehzahl des hermetischen Kompressors (34) aufweist, derart, dass der Kompressor, der durch eine Verstellpumpeneinheit bzw. Pumpeneinheit (30) mit variablem Zylinderinhalt angetrieben wird, die an einen Hydrokonstantmotor (33) bzw. Hydromotor mit konstantem Hubraum gekoppelt ist, sich bei einer Drehzahl dreht, die so nahe wie möglich der Nenndrehzahl des Kompressors ist, unabhängig von der Drehzahl des Verbrennungsmotors oder des Antriebsmotors, und eine Messfühlereinrichtung (8) gestattet, die Drehzahl der Welle des Hydromotors (33) zu messen, der mit dem Kompressor (34) derart verbunden ist, dass durch den Komparator (1) die Richtung der Verlagerung der Scheibe (31) der Pumpe (30) variablen Zylinderinhalts als Funktion der Drehzahländerungen des Hydromotors bezogen auf eine Solldrehzahl variiert.

2. Klimaanlagesystem nach Anspruch 1,
dadurch gekennzeichnet, dass die Änderung des Zylinderinhalts der Pumpe (30) erfolgt, indem das Gefälle einer Pumpe (31) mit Scheibe durch eine Servomotoreinheit (45) modifiziert wird, der durch eine elektronische Logik gesteuert wird.

3. Klimaanlagesystem nach Anspruch 1 oder 2,
dadurch gekennzeichnet, dass ein Endschalter (24) der Scheibe, der die neutrale Position der Scheibe anzeigt, das Anhalten des Servomotors (45) bestimmt.

4. Klimaanlagesystem nach einem der vorhergehenden Ansprüche,
dadurch gekennzeichnet, dass ein Regulierungssystem den Zylinderinhalt der Pumpe als Funktion einer Solltemperatur (19) und der Temperatur variiert, die im Karrosseriegehäuse durch einen Messfühler (4) gemessen wird.

5. Klimaanlagesystem nach einem der vorhergehenden Ansprüche,
dadurch gekennzeichnet, dass ein weiterer Komparator (32) gestattet, zwei verschiedene Solldrehzahlen zu bestimmen, eine erste (Z2) nahe der Nenndrehzahl des Kompressors und geringer als diese, wenn die Solltemperatur erreicht wurde, wobei der Servomotor den Zylinderinhalt der Pumpe in umgekehrter Richtung von der Änderungsrichtung der Pumpengeschwindigkeit variiert, und eine zweite (Z1), die der Nenndrehzahl entspricht.

6. Klimaanlagesystem nach Anspruch 5,
dadurch gekennzeichnet, dass ein dritter Komparator (2) gestattet, für jede Solldrehzahl (Z1 oder Z2) einen Bereich (ε) zu bestimmen, in welchem der Servomotor abgestoppt ist, wobei der Zylinderinhalt der Pumpe nicht mehr variiert.

## Claims

1. Air conditioning control system with a hermetic compressor for a motor vehicle characterised in that the control system comprises a system for regulating the rotation speed of the hermetic compressor (34), such that the compressor driven by a pump assembly (30) with variable cylinder capacity coupled to a hydraulic motor (33) with constant cylinder capacity runs at a speed as close as possible to the nominal speed of the compressor, whatever the rotation speed of the thermal engine or the propulsion engine and a sensor device (8) makes it possible to measure the rotation speed of the shaft of the hydraulic motor (33) connected to the compressor (34) so as to cause the comparator (1) to vary the direction of displacement of the platform (31) of the pump (30) with variable cylinder capacity as a function of the variations in speed of the hydraulic motor with respect to a reference speed.

2. Air conditioning system according to Claim 1, characterised in that the variation in cylinder capacity of the pump (30) is effected by modifying the inclination of a pump with a platform (31) by a servomotor assembly (45) controlled by electronic logic.

3. Air conditioning system according to Claim 1 or 2, characterised in that a limit switch (24) for the platform indicating the neutral position of the platform determines the stopping of the servomotor (45).

4. Air conditioning system according to one of the preceding claims, characterised in that a regulation system causing the cylinder capacity of the pump to vary as a function of a reference temperature (19) and the temperature measured inside the passenger compartment by a sensor (4).

5. Air conditioning system according to one of the preceding claims, characterised in that another comparator (32) makes it possible to determine two different reference speeds, a first one (Z2) close to the nominal speed of the compressor and below it when the reference temperature has been reached, the servomotor causing the cylinder capacity of the pump to vary in an inverse direction to the direction of variation of the pump speed, and a second one (Z1) corresponding to the nominal speed.

6. Air conditioning system according to Claim 5, characterised in that a third comparator (2) makes it possible, for each reference speed (Z1 or Z2) to determine a range (ε) within which the servo is stopped, there being no further variation in the cylinder capacity.
